# EUROPÄISCHE PATENTSCHRIFT

(11) **EP 2 493 968 B1**
(45) Veröffentlichungstag und Bekanntmachung des Hinweises auf die Patenterteilung: **10.12.2014**
(21) Anmeldenummer: 10765464.2
(22) Anmeldetag: 18.10.2010
(51) Int. Cl.: C08K 3/08

(54) **WÄRMEALTERUNGSBESTÄNDIGE POLYAMIDE**
HEAT STABILIZED POLYAMIDE COMPOSITION
COMPOSITON POLYAMIDE THERMOSTABILISÉE

(30) Priorität: 27.10.2009 EP 09174173; 17.05.2010 EP 10162960
(43) Veröffentlichungstag der Anmeldung: 05.09.2012
(73) Patentinhaber: BASF SE, 67056 Ludwigshafen (DE)
(72) Erfinder: PRUSTY, Manoranjan, 68167 Mannheim (DE); BAUMERT, Martin, 69221 Dossenheim (DE); WILMS, Axel, 67227 Frankenthal (DE); DESBOIS, Philippe, 68535 Edingen-Neckarhausen (DE); TRAUT, Alexander, 69198 Schriesheim (DE); LIPPERT, Gerald, 68623 Lampertheim (DE); KURIKOV, Jordan, 68159 Mannheim (DE)
(86) Internationale Anmeldenummer: PCT/EP2010/065582
(87) Internationale Veröffentlichungsnummer: WO 2011/051123

(56) Entgegenhaltungen:
- EP-A1- 1 369 447
- EP-A1- 1 498 445
- EP-A1- 1 681 313
- WO-A2-2008/080869
- WO-A2-2009/077492
- US-A- 5 843 329

## Beschreibung

Die Erfindung betrifft thermoplastische Formmassen, enthaltend
A) 10 bis 99,999 Gew.-% eines Polyamides
B) 0,001 bis 20 Gew.-% Eisenpulver mit einer Teilchengröße von maximal 10 µm (d₅₀-Wert), welches durch thermische Zersetzung von Eisenpentacarbonyl erhältlich ist,
C) 0 bis 70 Gew.-% weiterer Zusatzstoffe,
wobei die Summe der Gewichtsprozente der Komponenten A) bis C) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Der Einsatz von elementarem Eisenpulver in Polyamiden ist aus den DE-A 26 02 449 , JP-A 09/221590 , JP-A 2000/86889 (jeweils als Füllstoff), JP-A 2000/256 123 (als Dekorzusatz) sowie WO 2006/074912 und WO 2005/007727 (Stabilisatoren) bekannt.

Aus der EP-A 1 846 506 ist eine Kombination von Cu-haltigen Stabilisatoren mit Eisenoxiden für Polyamide bekannt.

Die Wärmealterungsbeständigkeit ist in den bekannten Formmassen, insbesondere über längere thermische Belastungszeiträume, immer noch unzureichend.

Die Oberfläche der Formkörper ist verbesserungsbedürftig, da bei der Wärmealterung sich poröse Stellen bilden sowie Blasenbildung erfolgt.
In der jüngeren EP-Anmeldung Aktenzeichen: 08171803.3 werden Kombinationen von Polyethyleniminen mit Eisenpulver zur Verbesserung der WAB vorgeschlagen.

Der vorliegenden Erfindung lag daher die Aufgabe zugrunde, thermoplastische Polyamidformmassen zur Verfügung zu stellen, welche eine verbesserte WAB und eine gute Oberfläche nach Wärmealterung sowie Mechanik aufweisen. Die Verarbeitung mittels Schweißverfahren soll verbessert werden, insbesondere für Vibrationsschweißen und Laserschweißverfahren.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 99,999, vorzugsweise 20 bis 98 und insbesondere 25 bis 94 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®}C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:
- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

AA/BB-Polymere
- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-nonanediamin, Terephthalsäure

- PA MXD6: m-Xylylendiamin, Adipinsäure

AA/BB-Polymere
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 61 und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Als Komponente B) enthalten die erfindungsgemäßen Formmassen 0,001 bis 20, vorzugsweise 0,05 bis 10 und insbesondere 0,1 bis 5 Gew.-% Eisenpulver mit einer Teilchengröße (auch als Partikelgröße bezeichnet) von maximal 10 µm (d₅₀-Wert), welches durch thermische Zersetzung von Eisenpentacarbonyl erhältlich ist.

Eisen kommt in mehreren allotropen Modifikationen vor:
1. α-Fe (Ferrit) bildet raumzentrierte Würfelgitter, ist magnetisierbar, löst wenig Kohlenstoff, kommt in reinem Eisen bis 928°C vor. Bei 770°C (Curie-Temperatur) verliert es seine ferromagnetischen Eigenschaften und wird paramagnetisch; Eisen im Temperaturbereich von 770 bis 928°C wird auch als β-Fe bezeichnet. Bei gewöhnlicher Temperatur und einem Druck von mindestens 13000 MPa geht α-Fe in sog. ε-Fe unter einer Vol.-Verminderung von ca. 0,20 cm³/mol über, wobei sich die Dichte von 7,85 auf 9,1 (bei 20000 MPa) erhöht.
2. γ-Fe (Austenit) bildet flächenzentrierte Würfelgitter, ist unmagnetisch, löst viel Kohlenstoff und ist nur im Temperaturbereich von 928 bis 1398°C zu beobachten.
3. δ-Fe, raumzentriert, existiert zwischen 1398°C und dem Schmelzpunkt 1539°C.

Metallisches Eisen ist allgemein silberweiß, mit einer Dichte 7,874 (Schwermetall), Schmelzpunkt 1539°C, Siedepunkt 2880°C; spezifische Wärme (zwischen 18 und 100°C) etwa 0,5 g⁻¹ K⁻¹, Zugfestigkeit 220 bis 280 N/mm². Die Werte gelten für das chemisch reine Eisen. Großtechnisch wird Eisen durch Verhüttung von Eisenerzen, Eisenschlacken, Kiesabbränden, Gichtstaub und durch Umschmelzen von Schrott und Legierung hergestellt.

Das erfindungsgemäße Eisenpulver wird durch thermische Zersetzung von Eisenpentacarbonyl hergestellt, vorzugsweise bei Temperaturen von 150°C bis 350°C. Die hierbei erhältlichen Partikel (Teilchen) haben eine vorzugsweise sphärische Form, d.h. kugelförmig oder nahezu kugelförmige Form (auch als sphärolitisch bezeichnet).

Bevorzugtes Eisenpulver weist eine Teilchengrößenverteilung (Partikelgrößenverteilung) wie nachstehend beschrieben auf, wobei die Teilchengrößenverteilung mittels Laserbeugung in einer hoch verdünnten wässrigen Suspension (z.B. mit Beckmann LS13320 Gerät) bestimmt wird. Optional kann die nachfolgend beschriebene Teilchengröße (und Verteilung) durch Mahlen oder/und Sieben eingestellt werden.

Hierbei bedeutet dₓₓ = XX% des Gesamtvolumens der Partikels ist kleiner als der Wert.
- d₅₀-Werte:: max. 10 µm, vorzugsweise 1,6 bis 8, insbesondere 2,9 bis 7,5 µm, ganz besonders 3,4 bis 5,2 µm
- d₁₀-Werte:: vorzugsweise 1 bis 5 µm, insbesondere 1 bis 3 und ganz besonders 1,4 bis 2,7 µm
- d₉₀-Werte:: vorzugsweise 3 bis 35 µm, insbesondere 3 bis 12 und ganz besonders 6,4 bis 9,2 µm.

Bevorzugt weist die Komponente B) einen Eisengehalt von 97 bis 99,8 g/100 g, vorzugsweise von 97,5 bis 99,6 g/100 g auf. Der Gehalt an weiteren Metallen beträgt vorzugsweise unter 1000 ppm, insbesondere unter 100 ppm und ganz besonders unter 10 ppm.

Der Fe-Gehalt wird üblicherweise durch Infrarotspektroskopie bestimmt.
Der C-Gehalt beträgt vorzugsweise 0,01 bis 1,2, vorzugsweise 0,05 bis 1,1 g/100 g und insbesondere 0,4 bis 1,1 g/100g. Dieser C-Gehalt entspricht bei den bevorzugten Eisenpulvern solchen, die im Anschluß an die thermische Zersetzung nicht mit Wasserstoff reduziert werden. Der C-Gehalt wird üblicherweise durch Verbrennen der Probenmenge im Sauerstoffstrom und anschließender IR Detektion des entstandenen CO₂-Gases (mittels Leco CS230 oder CS-mat 6250 der Firma Juwe) in Anlehnung an ASTM E1019 bestimmt.

Der Stickstoffgehalt beträgt vorzugsweise max. 1,5 g/100 g, bevorzugt von 0,01 bis 1,2 g/100g. Der Sauerstoffgehalt beträgt vorzugsweise max. 1,3 g/100g, bevorzugt 0,3 bis 0,65 g/100g. Die Bestimmungen von N und O erfolgt durch Erhitzen der Probe im Graphitofen auf ca. 2100°C. Der hierbei in der Probe erhaltene Sauerstoff wird zu CO umgesetzt und über einen IR-Detektor gemessen. Der unter den Reaktionsbedingungen freigesetzte N aus den N-haltigen Verbindungen wird mit dem Trägergas ausgetragen und mittels WLD (Thermal Conductivity Detector/TC) detektiert und erfasst (beide Methoden in Anlehnung an ASTM E1019).

Die Klopfdichte (tap density) beträgt vorzugsweise 2,5 bis 5 g/cm³, insbesondere 2,7 bis 4,4 g/cm³. Darunter wird im Allgemeinen die Dichte verstanden, wenn das Pulver in den Container z.B. gefüllt und geschüttelt wird, um eine Kompaktierung zu erzielen. Weiterhin bevorzugte Eisenpulver können mit Eisenphosphat, Eisenphosphit oder SiO₂ oberflächlich beschichtet sein.

Die BET-Oberfläche gemäß DIN ISO 9277 beträgt vorzugsweise von 0,1 bis 10 m²/g, insbesondere 0,1 bis 5 m²/g, bevorzugt 0,2 bis 1 m²/g und insbesondere 0,4 bis 1 m²/g.

Um eine besonders gute Verteilung der Eisenpartikel zu erzielen, kann man einen Batch mit einem Polymeren einsetzen. Polymere wie Polyolefine, Polyester oder Polyamide sind hierfür geeignet, wobei vorzugsweise das Batchpolymer gleich der Komponente A) ist. Der Masseanteil des Eisens im Polymeren beträgt in der Regel 15 bis 80, vorzugsweise 20 bis 40 Masse-%.

Als Komponente C) können die erfindungsgemäßen Formmassen bis zu 70, vorzugsweise bis zu 50 Gew.-% weiterer Zusatzstoffe enthalten.

Als faser- oder teilchenförmige Füllstoffe C1) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 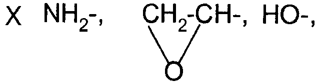
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.
Geeignet sind auch Langglasfasern als Komponente C1) welche als Roving eingesetzt werden können. Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.
Bevorzugt beträgt das L/D (Länge/Durchmesser)-Verhältnis 100 bis 4000, insbesondere 350 bis 2000 und ganz besonders 350 bis 700

Geeignet sind auch nadelförmige mineralische Füllstoffe.
Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente C2) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.
Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente C3) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(I)-Acetat, Kupfer(I)-Chlorid,-Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole C3) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 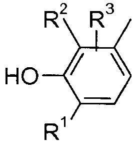 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 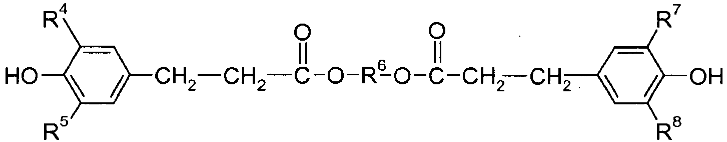 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind 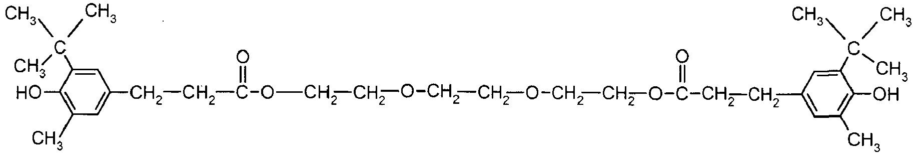 (Irganox® 245 der Firma BASF SE) 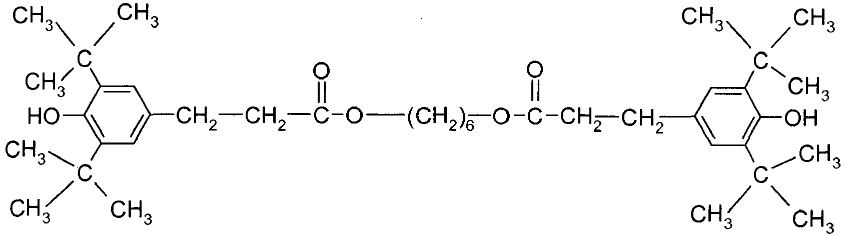 (Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat), Pentaerythrityl-tetrakis-[3-(3,5-di-tert.-butyl-4-hydroxy-phenol)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die Antioxidantien C), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente C4) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente C4) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe C) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopen-tadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

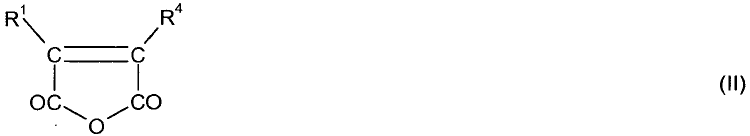

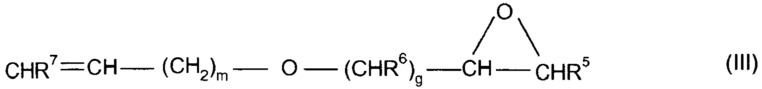

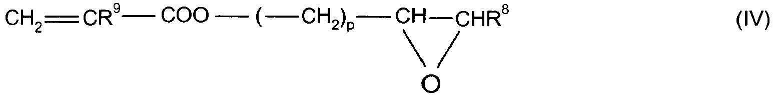

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidyl-methacrylat, (Meth)acrylsäure und/oder Maleinsäureanhydrid, und
- 1 bis 45,: insbesondere 5 bis 40 Gew.-% n-Butylacrylat und/oder 2-Ethylhexyl-acrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 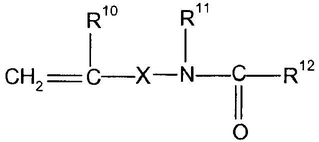 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 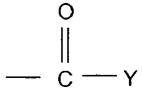
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethyl-acrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allyl-acrylat, Allyl-methacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuk-typen eingesetzt werden.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.
Nach einer weiteren bevorzugten Arbeitsweise können die Komponenten B) sowie gegebenenfalls C) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen langglasfaserverstärkten Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, Insbesondere von 5 bis 14 mm aufweist, kann mit den üblichen Verarbeitungsverfahren (wie z. B. Spritzgießen, Pressen) zu Formteilen weiterverarbeitet werden.

Das bevorzugte L/D-Verhältnis des Granulates beträgt nach Pultrusion 2 bis 8, insbesondere 3 bis 4,5.

Besonders gute Eigenschaften können beim Formteil mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug,·E·Modul, der Reißfestigkeit und der Kerbschlagzähigkeit erreicht.

Nach der Formteilverarbeitung z.B. durch Spritzguss beträgt die Faserlänge üblicherweise 0,5 bis 10 mm, insbesondere 1 bis 3 mm.

Die erfindungsgemäßen thermoplastischen Formmassen zeichnen sich durch eine gute Verarbeitbarkeit, insbesondere durch Schweißverfahren wie Vibrationsschweißen oder Laserschweißen, bei gleichzeitig guter Mechanik, sowie eine deutlich verbesserte Bindenahtfestigkeit und Oberfläche sowie thermische Stabilität aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

### I. Untersuchung unterschiedlicher Eisenpulver

Es wurden folgende Komponenten eingesetzt:

### Komponente A/1

Polyamid 66 mit einer Viskositätszahl VZ von 148 ml/g, gemessen als 0,5 gew.-%ige Lösung in 96 gew.-%iger Schwefelsäure bei 25°C nach ISO 307. (Es wurde Ultramid® A27der BASF SE verwendet).

### Komponente A/2

Polyamid aus m-Xylylendiamin und Adipinsäure (1 : 1 molares Verhältnis) mit VZ = 65 ml/g (Ultramid^{®} X17 der BASF SE)

### Komponente A/3

PA 6/66 (80 : 20) mit einer VZ von 176 ml/g (Ultramid^{®} C31-01)

### Komponente A/4

PA 6 mit einer VZ von 148 ml/g gemäß ISO 307 (Ultramid^{®} B27)

### Komponente B/1

Alle Eisenpulver haben CAS-Nr. 7439-89-6. Bestimmung des Fe, C, N und O -Gehaltes siehe Beschreibung S. 5 und 6.

| | | | |
|---|---|---|---|
| Fe | g/100 g | min. 97.7 | IR Detektion |
| C | g/100 g | max. 1.0 | IRS |
| N | g/100 g | max. 1.0 | TCD |
| O | g/100 g | max. 0.6 | IRS |

### Teilchengrößenverteilung: (Laserbeugung mit Beckmann LS13320)

- d₁₀: 1,4 bis 2,7 µm
- d₅₀: 2,9 bis 4,2 µm
- d₉₀: 6,4 bis 9,2 µm
BET-Oberfläche 0,44 m²/g (DIN ISO 9277)

### Komponente B/2

| | | | |
|---|---|---|---|
| Fe | g/100 g | min. 97.8 | |
| C | g/100 g | 0.6 - 0.9 | |
| N | g/100 g | 0.6 - 0.9 | |
| O | g/100 g | 0.45 - 0.65 | |

| Teilchengrößenverteilung: | | | |
|---|---|---|---|
| d₁₀ | µm | max. 1.0 | |
| d₅₀ | µm | max. 2.0 | |
| d₉₀ | µm | max. 3.0 | |
| Klopfdichte | g/cm³ | 3.4 - 4.0 | ASTM B 527 analog |

BET Oberfläche: 0,93 m²/g (DIN ISO 9277)

### Komponente B/3

| | | |
|---|---|---|
| Fe | g/100 g | min. 99.5 |
| C | g/100 g | max. 0.05 |
| N | g/100 g | max. 0.01 |
| O | g/100 g | max. 0.4 |
| SiO₂ coating | mg/kg | 0.08 - 0.12 |
| Klopfdichte | g/cm³ | 3.9 - 4.4 |

| Teilchengrößenverteilung: | | |
|---|---|---|
| d₁₀ | µm | max. 3 |
| d₅₀ | µm | max. 6 |
| d₉₀ | µm | max. 12 |

BET-Oberfläche: 0,32 m²/g (DIN ISO 9277)

### Komponente B/4

| | | |
|---|---|---|
| Fe | g/100 g | min. 97.2 |
| FePO₄ Coating | g/100 g | ca. 0.5 |
| C | g/100 g | max. 1.1 |
| N | g/100 g | max. 1.2 |
| O | g/100 g | max. 0.6 |

| Particle size distribution: | | |
|---|---|---|
| d₅₀ | µm | 3.4 - 4.5 |

BET-Oberfläche : 0,44 m²/g (DIN ISO 9277)

### Komponente B/5

| | | |
|---|---|---|
| Fe | g/100 g | min. 88 |
| C | g/100 g | 0.4 - 0.8 |
| O | g/100 g | max. 1.2 |
| N | g/100 g | max. 0.2 |
| P Coating | g/100 g | 8.0 - 11.0 |

| Teilchengrößenverteilung: | | |
|---|---|---|
| d₁₀ | µm | max. 3 |
| d₅₀ | µm | max. 6 |
| d₉₀ | µm | max. 18 |
| Klopfdichte | g/cm³ | 2.7 - 3.3 |

BET-Oberfläche: 0.89 m²/g (DIN ISO 9277)

### Komponente B/6

Batch aus 25% B/1 in Polyethylen

### Komponente B/7

Batch aus 75% B/1 in Polyethylen

### Komponente B/1V

Shelfplus 02 2400 der Ciba Spezialitätenchemie GmbH (20 %igen Fe-Pulver-Batch in Polyethylen, d₅₀ = 30 µm)
BET-Oberfläche gemäß DIN ISO 9277: 20 m²/g C-Gehalt : 0,012g/100g

### Komponente C/1

Glasfasern

### Komponente C/2a

Calciumstearat

### Komponente C/3

CuJ/KJ im Verhältnis 1 : 4 (20 iger Batch in PA6)

### Komponente C/4

40 %iger PA6 Masterbatch mit Nigrosin

### Komponente C/5

Na-pyrophosphat
Komponente C/6
NaCl

### Komponente C/1V

Fe₂O₃ spez. Oberfläche gemäß DIN 66131 (BET) 6,8 bis 9,2 m²/g
(Bayoxid E8708 von Lanxess)

### Komponente C/2V

Fe₃O₄ BET 0,23 m²/g (Minelco Magni F50 von Minelco GmbH)

### Komponente C/7

| Lupasol^{®} | WF |
|---|---|
| M_{w} | 25000 |
| Prim/sek./tert. Amine | 1/1,2/0,76 |

Lupasol^{®} = eingetragene Marke der BASF SE
Das Verhältnis primär/sekundär/tertiäre Amine wurde mittels ¹³C-NMR-Spektroskopie bestimmt.

Die Formmassen wurden auf einer ZSK 30 bei einem Durchsatz von 10 kg/h und ca. 260°C flachem Temperaturprofil hergestellt.

Es wurden folgende Messungen durchgeführt:
Zugversuch nach ISO 527, Mechanikkennwerte vor und nach Wärmelagerung bei 220°C im Umluftofen
VZ: c = 5 g/l in 96 %iger Schwefelsäure, nach ISO 307
Der Fülldruck wurde bestimmt als Druck am Umschaltpunkt beim Spritzgießen von Zugstäben gemäß ISO 527.

Die Zusammensetzungen der Formmassen und die Ergebnisse der Messungen sind den Tabellen zu entnehmen.

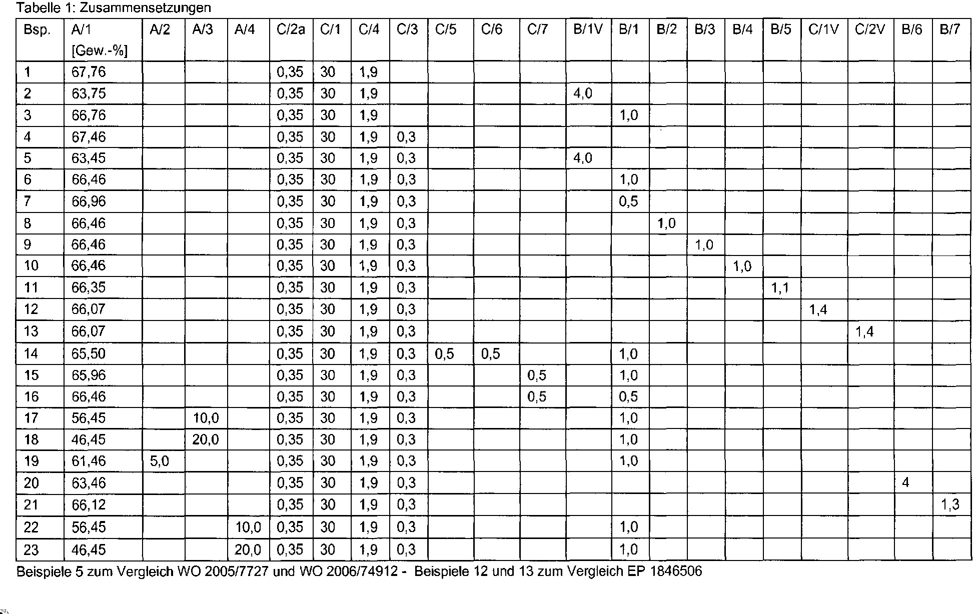

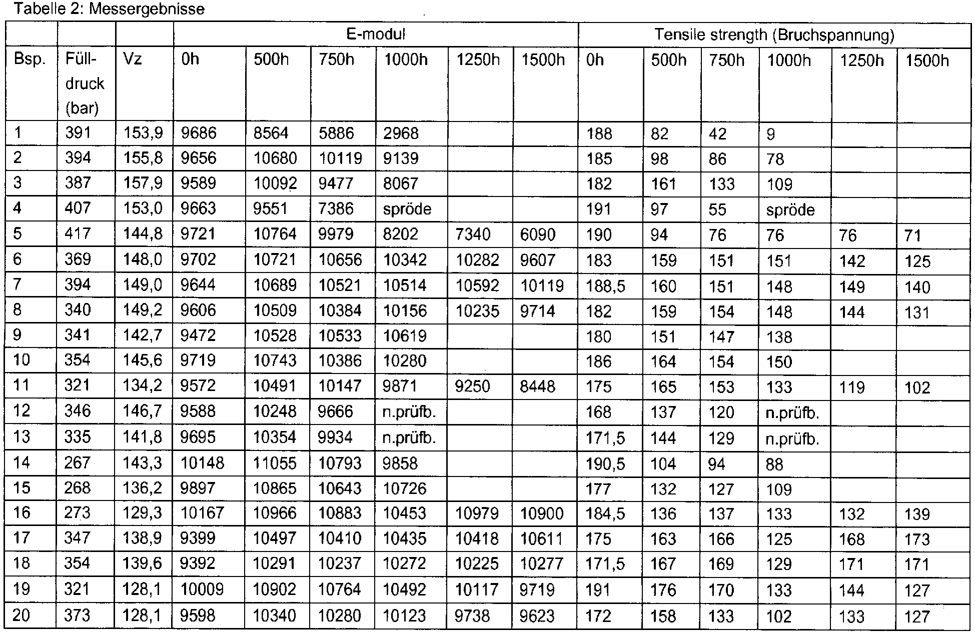

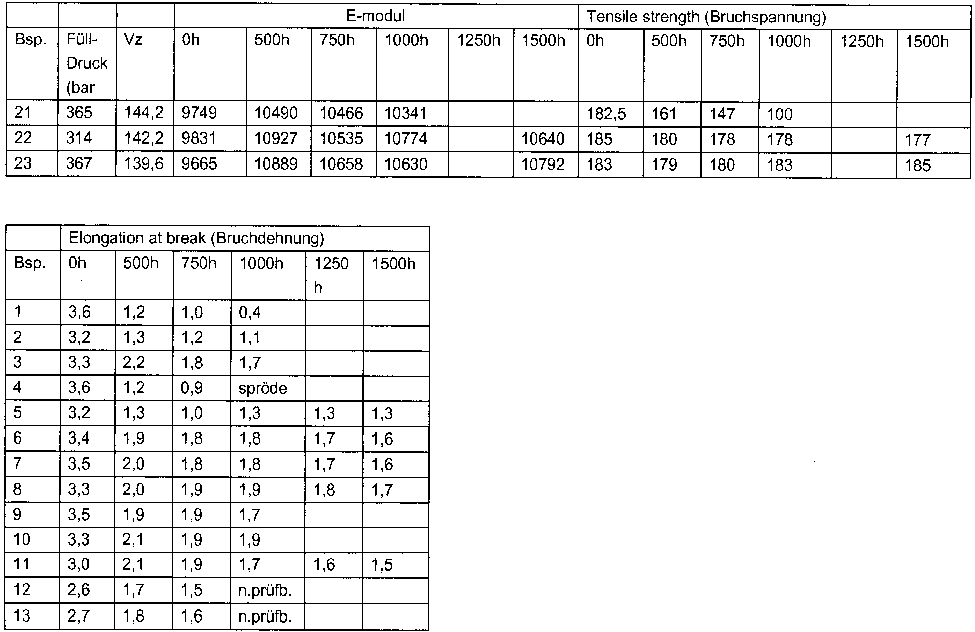

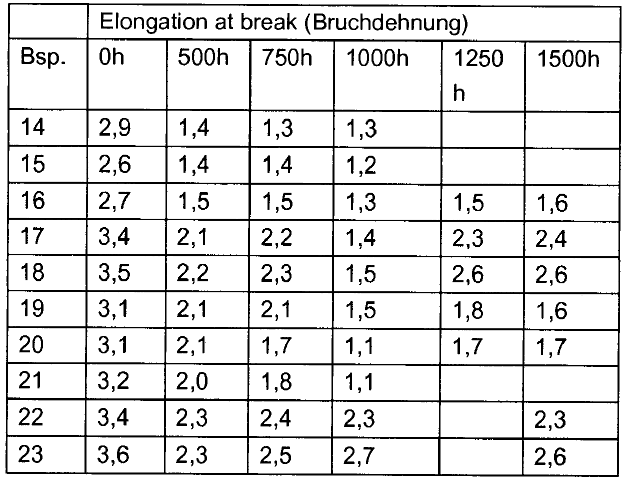

### II. PA 46 als Matrix

Die Komponenten entsprachen Teil I, jedoch wurde als Komponente A/5 PA 46 mit VZ: 151 ml/g (Stanyl^{®} der DSM) eingesetzt und als Komponente C/2b Ethylenbisstearylamid.

**Tabelle 3 :**

| Bsp. Nr | A/5 (%) | C/1 (%) | C/2b (%) | C/4 (%) | C/3 (%) | C/5 (%) | C/6 (%) | B/1V (%) | B/1 (%) |
|---|---|---|---|---|---|---|---|---|---|
| 1V | 64.46 | 30 | 0.34 | 1.9 | 0.3 | 0 | 0 | 3.0 | 0 |
| 1 | 65.75 | 30 | 0.34 | 1.9 | 0.3 | 0.5 | 0.46 | 0 | 0.75 |

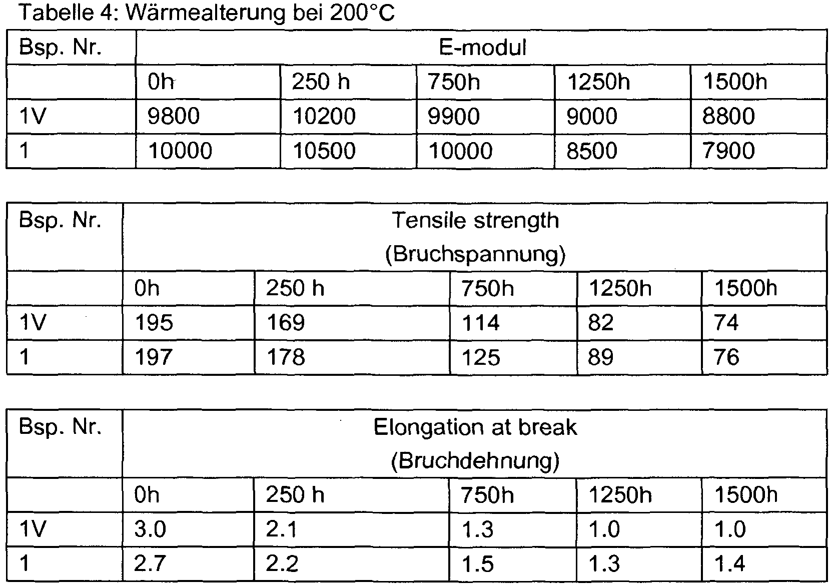

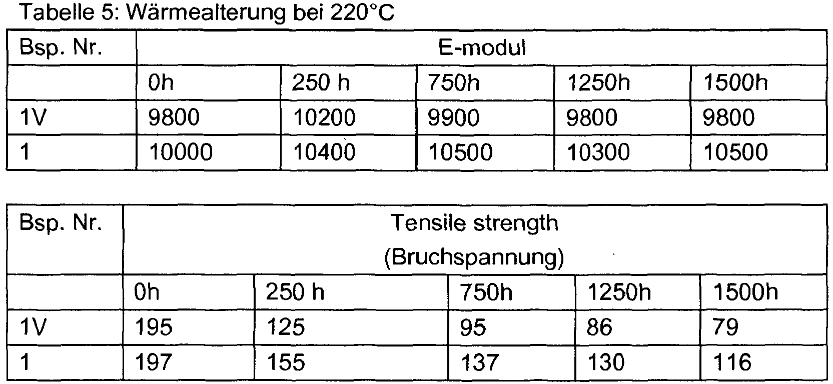

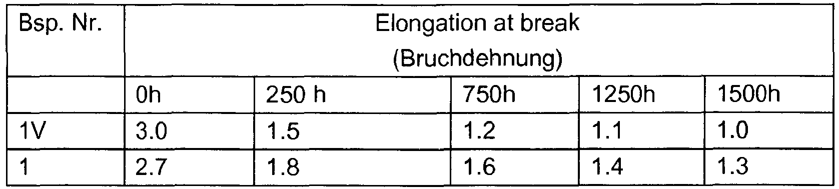

### III. Langglasfaserverstärkte Zusammensetzungen

Die Komponenten entsprachen I., jedoch wurde als Komponente C/8 ein Glasfaserroving mit Ø 17 µm eingesetzt.

Die Formmassen wurden wie folgt hergestellt:

| | | |
|---|---|---|
| 1) | Pultrusionsbedingungen: | |
| | | |
| | Temperatureinstellung Extruder | 285°C |
| | Imprägnierkammer | 290°C |
| | Vorheizen des Rovings | 180°C |
| | Abzugsgeschwindigkeit | 9 bis 12 m/min |
| | Granulatlänge | 12 mm |
| | L/D des Granulates | 4 |
| | | |
| 2) | Glasfaser L/D nach Spritzguss | 120 |

Die zur Bestimmung der Eigenschaften verwendeten Prüfkörper wurden mittels Spritzguss (Einspritztemperatur 280°C, Schmelztemperatur 80°C) erhalten.

**Tabelle 6**

| Bsp. Nr. | A/1 (%) | A/3 (%) | C/2a (%) | C/8 (%) | C/4 (%) | C/3 (%) | B/6 (%) |
|---|---|---|---|---|---|---|---|
| 1 | 33.45 | 10.0 | 0.35 | 50 | 1.9 | 0.3 | 4 |
| 2V | 37.45 | 10.0 | 0.35 | 50 | 1.9 | 0.3 | 0 |
| 3 | 53.45 | 10.0 | 0.35 | 30 | 1.9 | 0.3 | 4 |
| 4V | 57.45 | 10.0 | 0.35 | 30 | 1.9 | 0.3 | 0 |

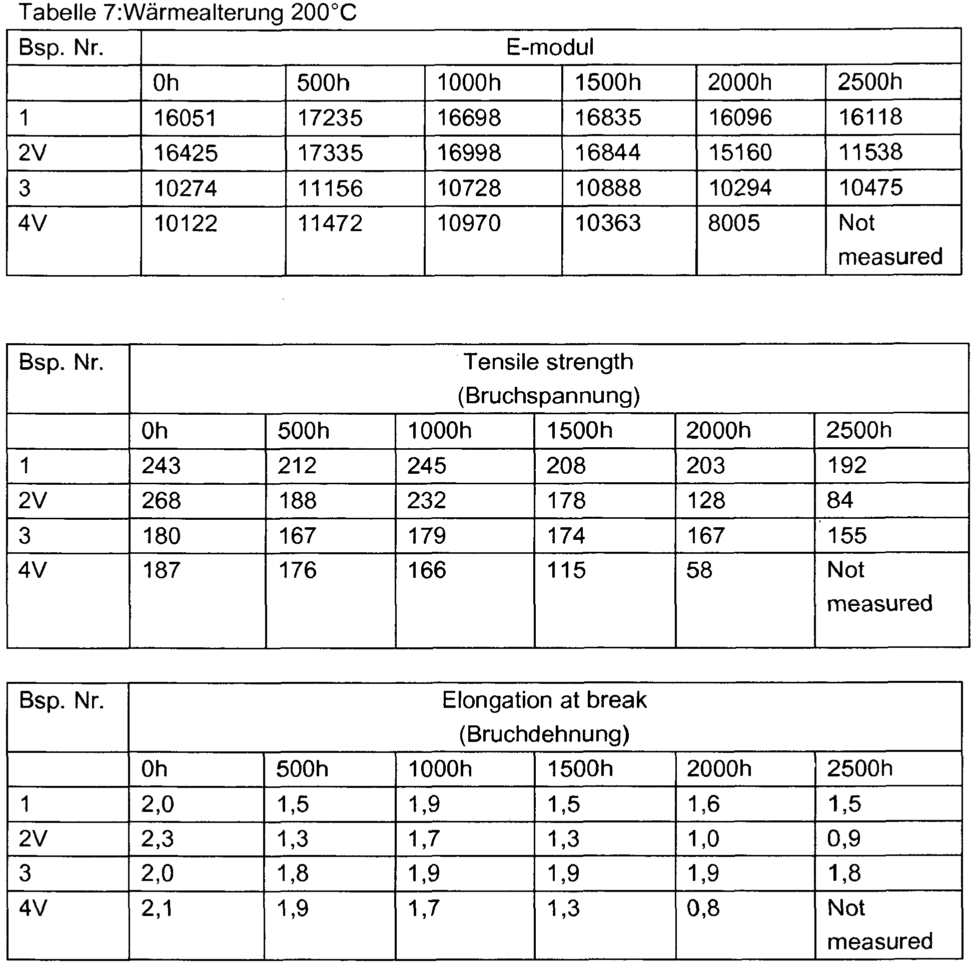

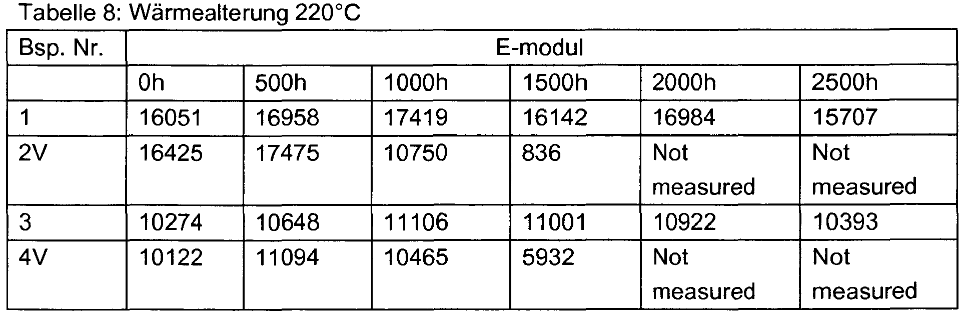

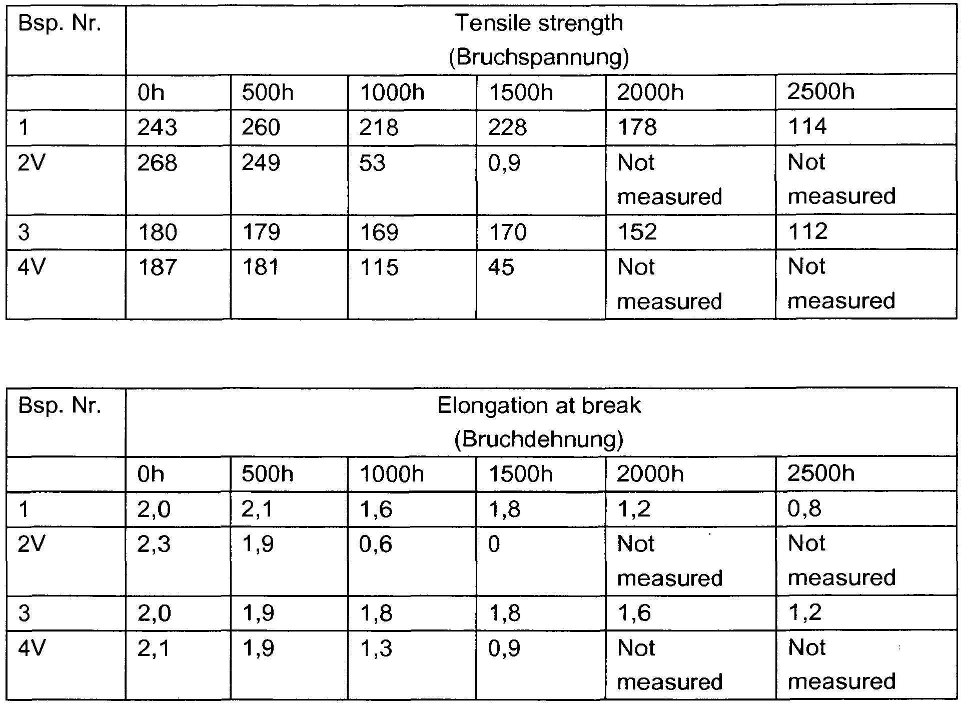

### IV. Vibrationsschweißen

Es wurden die gleichen Komponenten wie unter I eingesetzt.

**Tabelle 9**

| Bsp. Nr. | A/1 (%) | A/3 (%) | C/1 (%) | C/2a (%) | C/4 (%) | C/3 (%) | B/1 (%) |
|---|---|---|---|---|---|---|---|
| 1V | 67.45 | 0 | 30 | 0.35 | 1.9 | 0.3 | 0 |
| 1 | 66.45 | 0 | 30 | 0.35 | 1.9 | 0.3 | 1.0 |
| 2 | 46.45 | 20 | 30 | 0.35 | 1.9 | 0.3 | 1.0 |

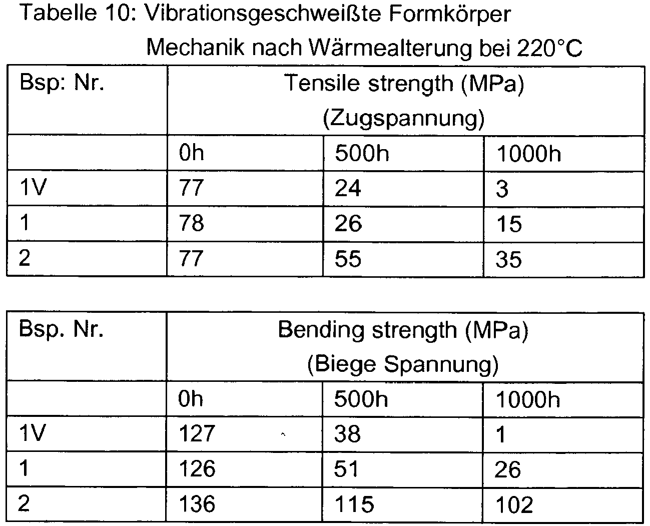

### Prüfbeschreibung: Vibrationsschweißen von technischen Kunststoffen

### Prüfkörper

Zur Untersuchung des Materialeinflusses auf den Schweißprozess und die Nahtqualität werden plattenförmige Probekörper verwendet. Durch die Verwendung eines Filmangusses über die gesamte Breite des Spritzgussteiles wird eine gleichmäßige Schmelzeorientierung erreicht und Inhomogenität vermieden. Die spritzgegossenen Platten haben eine Dicke von 4 mm und erhalten durch Absägen des Anspritzbereiches ein Maß von 110 mm x 110 mm. Anschließend werden die Platten mit einer Kreissäge in Spritzrichtung halbiert und erhalten ein Endmaß von ca. 55 mm x 110 mm. Bei den folgenden Schweißungen werden die außenliegenden (nicht gesägten) Seiten geschweißt. Es ergibt sich eine Fügefläche von 440 mm². Die Standardplatte dient als geometrisch einfacher Probekörper, um Material- und/oder Parametereinflüße auf die Nahtqualität zu analysieren. Der einfache Form der Platte ermöglicht ein sicheres fixieren im Schweißwerkzeug, da sie im Werkzeug über die gesamte Länge beidseitig gestützt wird.

### Schweißmaschine

Die Schweißuntersuchungen werden auf einer linearen Vibrationsschweißmaschine der Fa. Branson Ultraschall Modell M-102 H durchgeführt.

### Schweißprozess

Die Schweißplatten werden mit der Schwingform "linear-längs" geschweißt. Bei den Vibrationsschweißuntersuchungen wird im Modus "weggesteuerte Schweißung mit konstantem Druckniveau" gearbeitet. Die Versuche erfolgen bei konstanter Amplitude von 0,9 mm und konstantem Schweißdruck von 1,6 MPa. Als Schwingfrequenz wird die Resonanzfrequenz verwendet, die bei ca. 220 Hz liegt. Pro Parameter- / Materialeinstellung werden zwei Schweißversuche durchgeführt.

### Mechanische Prüfung

Die für die Zug- und Biegeversuche notwendigen Flachproben werden mit einer Kreissäge auf eine Breite von 25 mm senkrecht zur geschweißten Fläche geschnitten. Von jeder Parameter- / Materialeinstellung werden drei Proben aus einer geschweißten Platte geprüft. Die Schweißwulst wird dabei nicht entfernt.

### V: Teilaromatisches Polyamid (6T/6I/MXD.T/I)

**Tabelle 11:**

| Zusammensetzungen (Gew.-%) | | | | | | | | | | | | |
|---|---|---|---|---|---|---|---|---|---|---|---|---|
| Bsp. | A/6 | A/4 | B/1 | C/1 | C/2 | C/3 | C/4 | C/5 | C/6 | C/7 | C/8 | C/9 |
| 1 | 64,10 | | | 35,00 | 0,05 | 0,35 | | | | | | 0,50 |
| 2 | 58,85 | | | 35,00 | 0,05 | 0,35 | 1,25 | 4,00 | | | | 0,50 |
| 3 | 59,45 | | | 35,00 | 0,05 | 0,35 | | 4,00 | 0,65 | | | 0,50 |
| 4 | 59,80 | | | 35,00 | 0,05 | 0,35 | | 4,00 | | | 0,30 | 0,50 |
| 5 | 49,80 | 10,00 | | 35,00 | 0,05 | 0,35 | | 4,00 | | | 0,30 | 0,50 |
| 6 | 55,80 | | 4,00 | 35,00 | 0,05 | 0,35 | | 4,00 | | | 0,30 | 0,50 |
| 7 | 45,80 | 10,00 | 4,00 | 35,00 | 0,05 | 0,35 | | 4,00 | | | 0,30 | 0,50 |
| 8 | 45,30 | 10,00 | 4,00 | 35,00 | 0,05 | 0,35 | | 4,00 | | 0,50 | 0,30 | 0,50 |

### A/6

Teilaromatisches Polyamid auf Basis von 6.T/6.I/MXD.T/I mit 64 Gew.-% 6.T Einheiten, 29 Gew.-% 6.I und 7 Gew.-% MXD.T/MXD.I Einheiten. Gemessene VZ des Basispolymers 90 ml/g (0.5 Gew.-% in 96%iger Schwefelsäure bei 25 °C, ISO 307).
T = Terephthalsäure I = Isophthalsäure MXD = m-Xylylendiamin

### A/4 (siehe I.)

Polyamid 6 mit einer VZ von148 ml/g (ISO 307; Ultramid^{®} B27).

### B/1

Batch aus 25 Gew.-% B/1 (siehe I.) in Polyamid 66.

### C/1

Glasfasern mit 10 µm mittlerem Durchmesser

### C/2

Talkum

### C/3

Partiell oxidiertes Polyethylenwachs (Säurezahl 15-19 mg KOH/g; Schmelzeviskosität bei 120°C: 350 - 470 mm²/s ((DGF M-III 8); Luwax® OA5)

### C/4

Mischung aus verschiedenen Additiven (Teile gewichtsbezogen):
1 Teil N,N'-hexan-1,6-dihylbis(3-(3,5-di-tert-butyl-4-hydroxyphenylpropionamid)) (Irganox® 1098),
1 Teil hochmolekulares, gehindertes Amin mit der folgenden Struktur (Chimassorb® 2020): 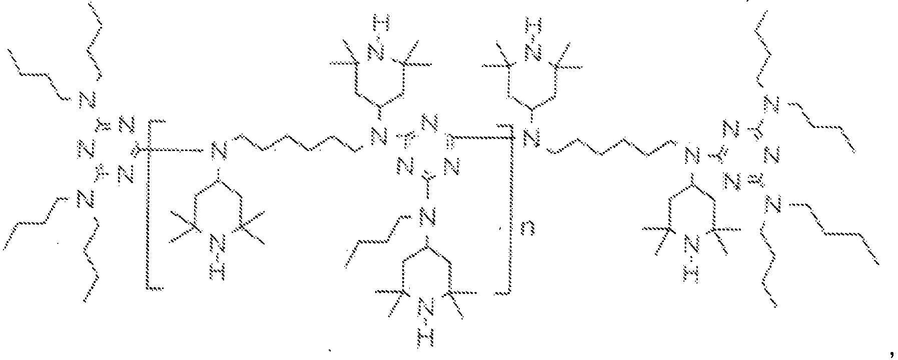
1 Teil 2,2'-Methylen bis(6-(2H-benzotriazol-2-yl)-4-1,1,3,3-tetramethylbutyl)phenol) (Tinuvin® 360),
4 Teile eines Ruß-Batches (30 Gew.-% in LDPE)

### C/5

Ethylen-butylacrylat-Kautschuk, mit Maleinsäureanhydrid funktionalisiert (Fusabond® NM 598D)

### C/6

4,3'-Bis(alpha, alpha-dimethylbenzyl)diphenylamin (Naugard® 445)

### C/7

Polyethylenimin mit M_{w}∼25000 g/mol und einem Verhältnis von 1:1,20:0,76 von primären : sekundären :tertiärem Amin (Lupasol® WF)

### C/8

CuJ/KJ im Verhältnis 1 : 4

### C/9

Calcium Montanat

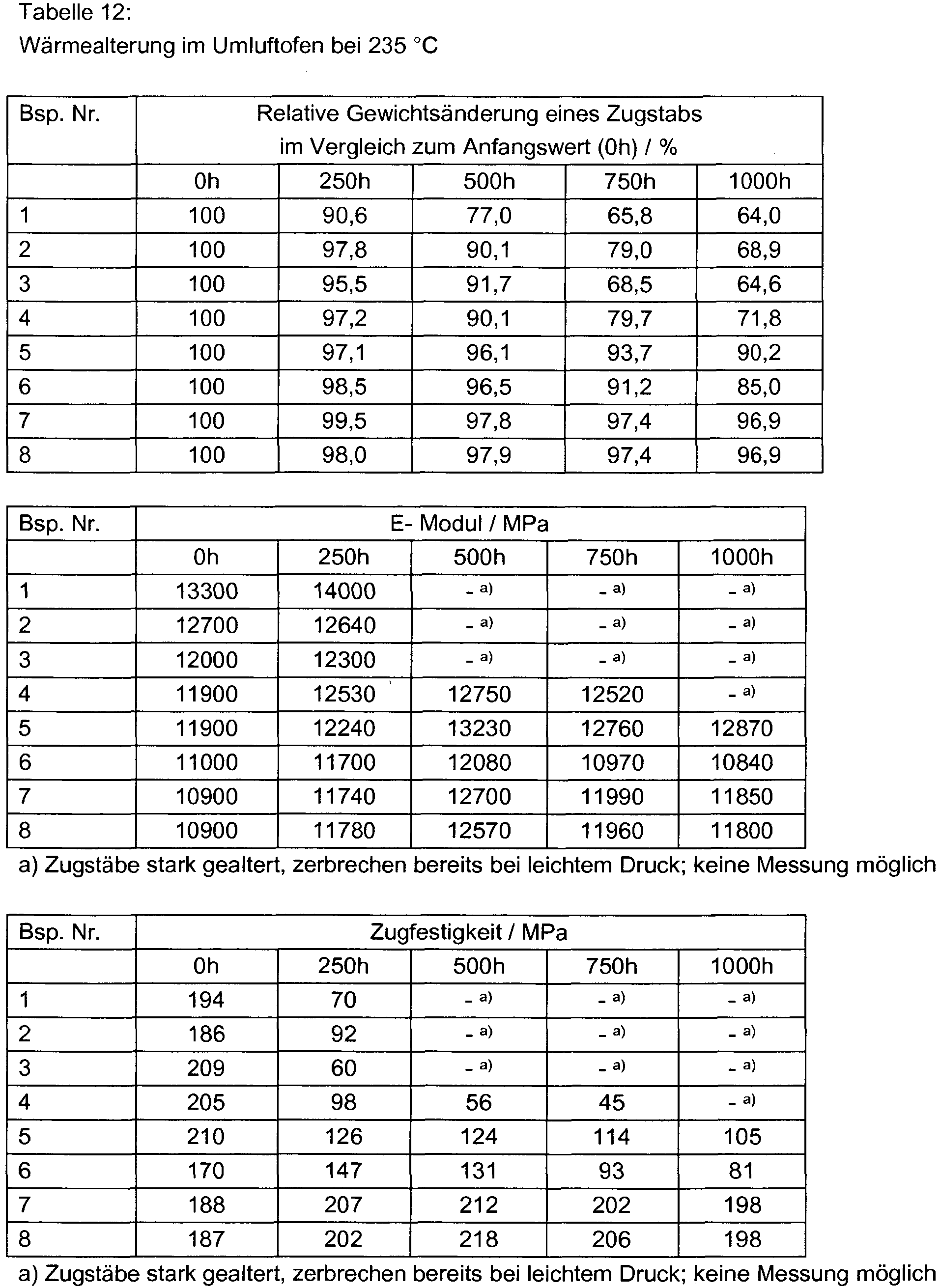

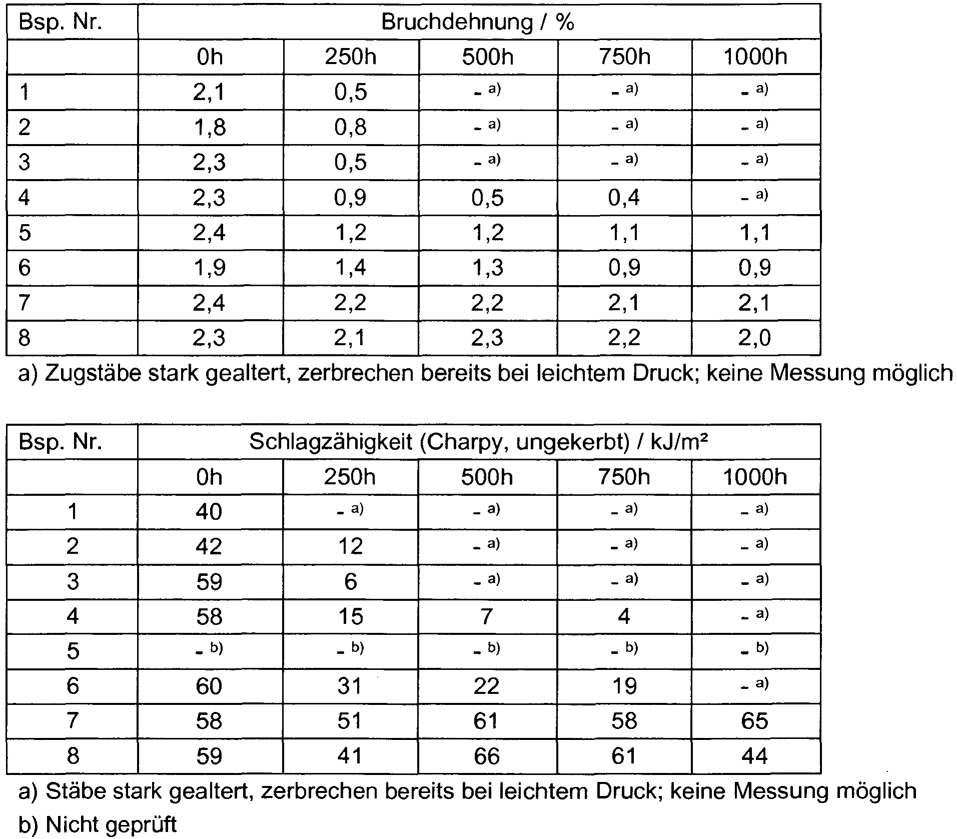

## Patentansprüche

1. Thermoplastische Formmassen, enthaltend
A) 10 bis 99,999 Gew.-% eines Polyamides
B) 0,001 bis 20 Gew.-% Eisenpulver mit einer Teilchengröße von maximal 10 µm (d₅₀-Wert), welches durch thermische Zersetzung von Eisenpentacarbonyl erhältlich ist und eine spezifische BET-Oberfläche von 0,1 bis 5 m²/g gemäß DIN ISO 9277 aufweist
C) 0 bis 70 Gew.-% weiterer Zusatzstoffe,
wobei die Summe der Gewichtsprozente der Komponenten A) bis C) 100 % ergibt.

2. Thermoplastische Formmassen nach Anspruch 1, in denen die Komponente B) einen d₁₀-Wert von 1 bis 5 µm aufweist.

3. Thermoplastische Formmassen nach den Ansprüchen 1 oder 2, in denen die Komponente B) einen d₉₀-Wert von 3 bis 35 µm aufweist.

4. Thermoplastische Formmassen nach den Ansprüchen 1 bis 3, in denen die Komponente B) einen C-Gehalt von 0,05 bis 1,2 g/100g aufweist (gemäß ASTM E 1019).

5. Thermoplastische Formmassen nach den Ansprüchen 1 bis 4, in denen die Komponente B) eine Klopfdichte von 2,5 bis 5 g/cm³ aufweist.

6. Thermoplastische Formmassen nach den Ansprüchen 1 bis 5, in denen die Komponente B) mit Eisenphosphat, Eisenphosphid oder SiO₂ auf der Oberfläche der Teilchen beschichtet ist

7. Verwendung der thermoplastischen Formmassen gemäß den Ansprüchen 1 bis 6 zur Herstellung von Fasern, Folien und Formkörpern

8. Verwendung der thermoplastischen Formmassen gemäß den Ansprüchen 1 bis 6 zur Herstellung von Formkörpern durch Vibrations- oder Laserschweißen.

9. Fasern, Folien und Formkörper, erhältlich aus den thermoplastischen Formassen gemäß den Ansprüchen 1 bis 6.

## Claims

1. A thermoplastic molding composition comprising
A) from 10 to 99.999% by weight of a polyamide
B) from 0.001 to 20% by weight of iron powder with a particle size of at most 10 µm (d₅₀ value), which is obtainable via thermal decomposition of pentacarbonyliron and has a specific BET surface area of from 0.1 to 5 m²/g to DIN ISO 9277,
C) from 0 to 70% by weight of further additives,
where the total of the percentages by weight of components A) to C) is 100%.

2. The thermoplastic molding composition according to claim 1, in which component B) has a d₁₀ value of from 1 to 5 µm.

3. The thermoplastic molding composition according to claim 1 or 2, in which component B) has a d₉₀ value of from 3 to 35 µm.

4. The thermoplastic molding composition according to claims 1 to 3, in which component B) has a C content of from 0.05 to 1.2 g/100 g (to ASTM E1019).

5. The thermoplastic molding composition according to claims 1 to 4, in which component B) has a tap density of from 2.5 to 5 g/cm³.

6. The thermoplastic molding composition according to claims 1 to 5, in which component B) has been coated with iron phosphate, iron phosphide, or SiO₂, on the surface of the particles.

7. The use of the thermoplastic molding compositions according to claims 1 to 6 for the production of fibers, foils, and moldings.

8. The use of the thermoplastic molding compositions according to claims 1 to 6 for the production of moldings via vibration welding or laser welding.

9. A fiber, a foil, or a molding, obtainable from the thermoplastic molding compositions according to claims 1 to 6.

## Revendications

1. Masses de moulage thermoplastiques, contenant
A) 10 à 99,999% en poids d'un polyamide
B) 0,001 à 20 % en poids de poudre de fer présentant une grosseur de particule de maximum 10 µm (valeur d₅₀), qui peut être obtenue par décomposition thermique de fer-pentacarbonyle et qui présente une surface spécifique BET de 0,1 à 5 m²/g selon la norme DIN ISO 9277
C) 0 à 70% en poids d'autres additifs,
la somme des % en poids des composants A) à C) valant de 100%.

2. Masses de moulage thermoplastiques selon la revendication 1, dans lesquelles le composant B) présente une valeur d₁₀ de 1 à 5 µm.

3. Masses de moulage thermoplastiques selon les revendications 1 ou 2, dans lesquelles le composant B) présente une valeur d₉₀ de 3 à 35 µm.

4. Masses de moulage thermoplastiques selon les revendications 1 à 3, dans lesquelles le composant B) présente une teneur en C de 0,05 à 1,2 g/100 g (selon la norme ASTM E 1019).

5. Masses de moulage thermoplastiques selon les revendications 1 à 4, dans lesquelles le composant B) présente une densité tassée de 2,5 à 5 g/cm³.

6. Masses de moulage thermoplastiques selon les revendications 1 à 5, dans lesquelles le composant B) est revêtu à la surface des particules de phosphate de fer, de phosphure de fer ou de SiO₂.

7. Utilisation des masses de moulage thermoplastiques selon les revendications 1 à 6 pour la production de fibres, de feuilles et de corps moulés.

8. Utilisation des masses de moulage thermoplastiques selon les revendications 1 à 6 pour la production de corps moulés par soudage par vibration ou au laser.

9. Fibres, feuilles et corps façonnés pouvant être obtenus à partir des masses de moulage thermoplastiques selon les revendications 1 à 6.
